# EUROPEAN PATENT APPLICATION

(11) **EP 2 457 769 A1**
(43) Date of publication of application: **30.05.2012**
(21) Application number: 11155618.9
(22) Date of filing: 23.02.2011
(51) Int. Cl.: B60Q 1/00, F21S 8/12, F21V 5/00

(54) **Vehicle lamp**

(30) Priority: 26.11.2010 TW 099222999
(71) Applicant: Sirius Light Technology Co., Ltd, Tainan City (TW)
(72) Inventor: Huang, Cheng-Nan, Tainan City (TW)
(74) Representative: Style, Kelda Camilla Karen

(57) **Abstract**

A vehicle lamp includes a lamp housing (1), a first light emitting component (2), a second light emitting component (6), a lens member (3), and a light-blocking plate (4). The lamp housing (1) defines a receiving space (11) having first and second space portions adjacent to each other, and is formed with a light-exit opening (12). The first and second light emitting components (2, 6) are disposed in a respective one of the first and second space portions. The lens member (3) closes the light-exit opening (12), and includes a first lens body (32) aligned with the first light emitting component (2) and a second lens body (33) aligned with the second light emitting component (6). The light-blocking plate (4) is disposed in the receiving space (11), is aligned with a portion of the second lens body (33) that is adjacent to the first lens body (32), and is disposed to block a portion of light radiated by the second light emitting component (6) from reaching the second lens body (33).

## Description

This application claims priority of Taiwanese Application No. 099222999, filed on November 26, 2010.

The present invention relates to a vehicle lamp, more particularly to a vehicle lamp having a light output with a darker region, a brighter region, and a boundary region between the darker and brighter regions.

Current vehicle lamp design not only needs to present a unique style, but also needs to ensure a light output conforming with strict traffic regulations, so that the vehicle lamp may provide illumination with high luminance and high efficiency such that drivers may be clearly aware of road conditions, and so as to reduce danger and discomfort of oncoming vehicle drivers and pedestrians caused by the glare resulting from the illumination.

Therefore, each detail in vehicle lamp design, from directions and types of light sources, shapes and dimensions of lenses/reflectors, to relative positions of the light sources, lenses/reflectors and light-blocking plates, will significantly affect illumination provided by vehicle lamps. Obviously, an optical system of the vehicle lamp is very complex, and the vehicle lamp design usually requires high precision and highly difficult manufacturing and processing technologies. Thus, how to raise design efficiency and how to reduce manufacturing costs of vehicle lamps are continuously being sought by those in the industry.

Therefore, an object of the present invention is to provide a vehicle lamp that may be developed and manufactured with relative ease and precision.

Accordingly, the vehicle lamp of the present invention includes a lamp housing, a first light emitting component, a second light emitting component, a lens member, and a light-blocking plate. The lamp housing defines a receiving space having first and second space portions adjacent to each other, and is formed with a light-exit opening. The first light emitting component and the second light emitting component are disposed in a respective one of the first and second space portions. The lens member closes the light-exit opening of the lamp housing. The lens member includes a first lens body aligned with the first light emitting component, and a second lens body aligned with the second light emitting component. The light-blocking plate is disposed in the receiving space, is aligned with a portion of the second lens body that is adjacent to the first lens body, and is disposed to block a portion of light radiated by the second light emitting component from reaching the second lens body.

Other features and advantages of the present invention will become apparent in the following detailed description of the preferred embodiment with reference to the accompanying drawings, of which:
Figure 1 is a perspective view of a preferred embodiment of a vehicle lamp of the present invention;
Figure 2 is an exploded perspective view of the preferred embodiment; and
Figure 3 is a cross-sectional schematic view of the preferred embodiment.

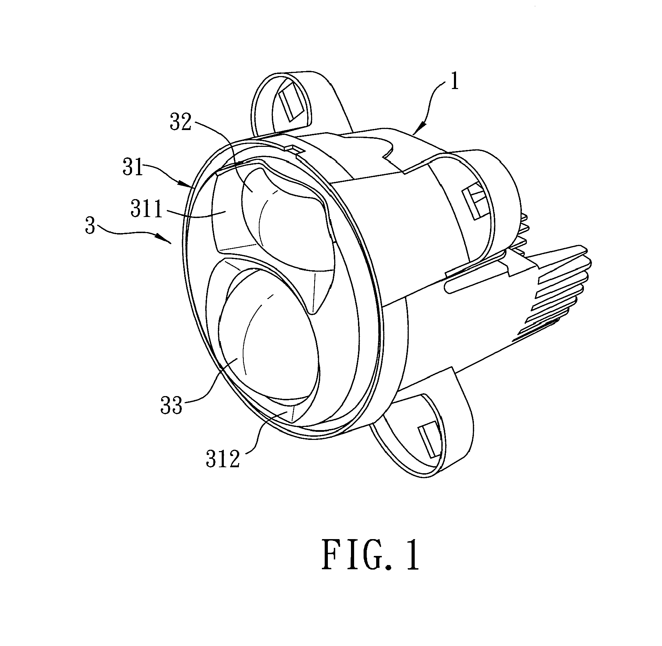

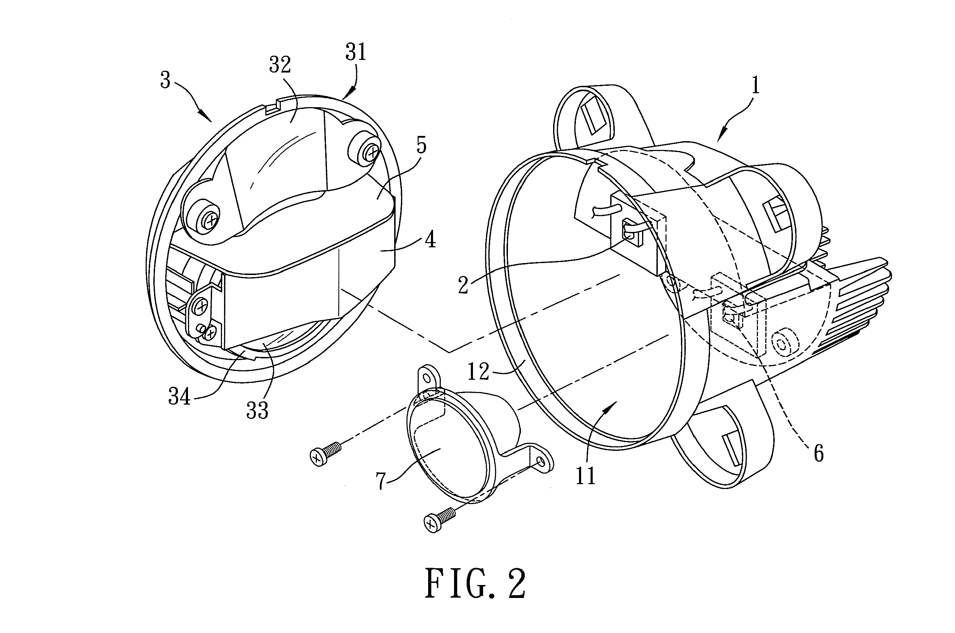

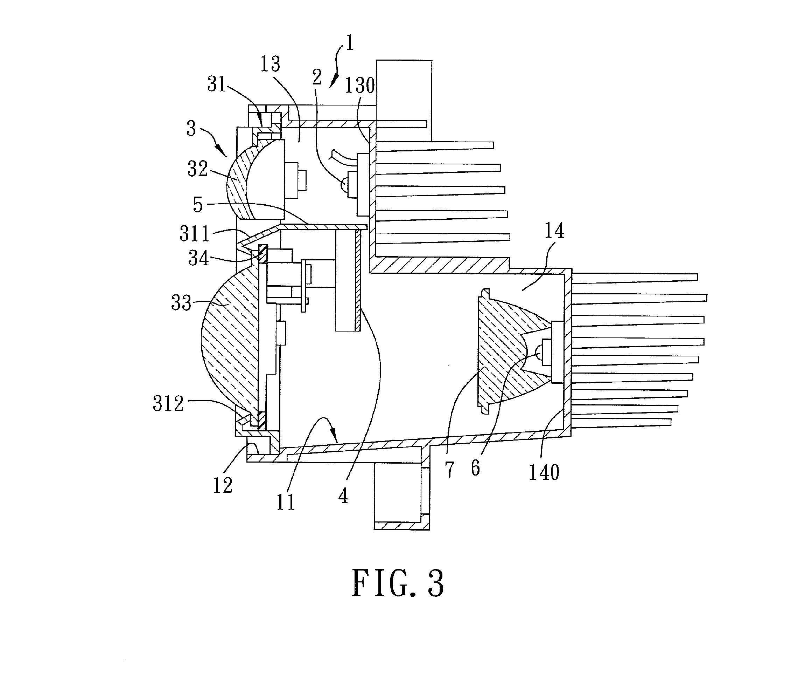

Referring to Figure 1 to Figure 3, a preferred embodiment of the vehicle lamp of the present invention is exemplified as a near projecting lamp.

The vehicle lamp includes a lamp housing 1, a first light emitting component 2 received in the lamp housing 1, a second emitting component 6 received in the lamp housing 1, a lens member 3 closing the lamp housing 1, a light-blocking plate 4 received in the lamp housing 1, a reflector plate 5 received in the lamp housing 1, and a light guide piece 7 that is received in the lamp housing 1 and that covers the second light emitting component 6.

The lamp housing 1 defines a receiving space 11 having first and second space portions adjacent to each other, and is formed with a light-exit opening 12. The first space portion is above the second space portion in this embodiment. The receiving space 11 has a shallow recess part 13 serving as the first space portion and extending rearwardly from a portion of the light-exit opening 12, and a deep recess part 14 serving as the second space portion and extending rearwardly from a remaining portion of the light-exit opening 12. Each of the shallow recess part 13 and the deep recess part 14 has a recess bottom 130, 140. The recess bottom 130 of the shallow recess part 13 is disposed closer to the light-exit opening 12 compared to the recess bottom 140 of the deep recess part 14.

Each of the first light emitting component 2 and the second light emitting component 6 is disposed in a respective one of the shallow recess part 13 and the deep recess part 14. In this embodiment, the first light emitting component 2 is disposed on the recess bottom 130 of the shallow recess part 13, and the second light emitting component 6 is disposed on the recess bottom 140 of the deep recess part 14. Accordingly, the first light emitting component 2 is disposed above the second light emitting component 6, and the first light emitting component 2 is disposed closer to the light-exit opening 12 compared to the second light emitting component 6. In this embodiment, the first and second light emitting components 2, 6 are both Light Emitting Diode (LED) lamps.

The lens member 3 closes the light-exit opening 12 of the lamp housing 1. The lens member 3 includes a metallic mounting frame 31 for mounting on the lamp housing 1 at the light-exit opening 12, a first lens body 32 mounted on the mounting frame 31 and aligned with the first light emitting component 2, a second lens body 33 mounted on the mounting frame 31 and aligned with the second light emitting component 6, and a plastic lens frame 34 for securing the second lens body 33 on the mounting frame 31. Preferably the mounting frame 31 of the lens member 3 has an external surface formed with a first reflective concave surface portion 311 that surrounds the first lens body 32, and a second reflective concave surface portion 312 that surrounds the second lens body 33. In this embodiment, the first lens body 32 is a concave-convex lens, and the second lens body 33 is a plano-convex lens.

The light-blocking plate 4 is disposed in the receiving space 1, is aligned with a portion of the second lens body 33 that is adjacent to the first lens body 32, and is disposed to block a portion of light radiated by the second light emitting component 6 from reaching the second lens body 33.

Each of the first light emitting component 2 and the first lens body 32 has an edge proximate to the light-blockingplate 4. The reflector plate 5 is disposed in the receiving space 11 proximate to the edge of the first light emitting component 2 and the edge of the first lens body 32, and extends in a direction from the first light emitting component 2 toward the first lens body 32.

In more detail, the light-blocking plate 4 and the reflector plate 5 are mounted on the mounting frame 31, and are disposed at a vicinity of a junction of the shallow recess part 13 and the deep recess part 14. The reflector plate 5 is disposed above the light-blocking plate 4. The light-blocking plate 4 has one edge touching the reflector plate 5, and an opposite edge substantially aligned with an optical axis of the second lens body 33.

Primarily, light beams emitted from the first light emitting component 2 will be reflected by the reflector plate 5, refracted and focused by the first lens body 32, and reflected again by the first reflective concave surface portion 311. On the other hand, light beams emitted from the second light emitting component 6 will be refracted first by the light guide piece 7. Subsequently, a portion of the refracted light beams will be blocked by the light-blocking plate 4. A remaining portion thereof which is not blocked will be refracted again and focused by the second lens body 33, and reflected by the second reflective concave surface portion 312.

Therefore, by using two pairs of corresponding and matching light emitting components and lens bodies to cooperate with other optical elements in a special spatial arrangement, the vehicle lamp may provide a light output with darker and brighter regions and a discernible boundary region between the darker and brighter regions so as to comply with traffic regulations. Moreover, arrangement of structural components of the vehicle lamp is relative simple and does not require complicated and high-precision-processed components, such that the vehicle lamp may be developed and manufactured with relative ease to reduce manufacturing costs.

## Claims

1. A vehicle lamp comprising:
a lamp housing (1) that defines a receiving space (11) having first and second space portions adjacent to each other, and that is formed with a light-exit opening (12);
a first light emitting component (2) and a second light emitting component (6) disposed in a respective one of the first and second space portions;
a lens member (3) closing the light-exit opening (12) of the lamp housing (1), the lens member (3) including a first lens body (32) aligned with the first light emitting component (2), and a second lens body (33) aligned with the second light emitting component (6); and
a light-blocking plate (4) disposed in the receiving space (11), aligned with a portion of the second lens body (33) that is adjacent to the first lens body (32), and disposed to block a portion of light radiated by the second light emitting component (6) from reaching the second lens body (33).

2. The vehicle lamp as claimed in Claim 1, **characterized in that** one of the first and second light emitting components (2, 6) is disposed closer to the light-exit opening (12) compared to the other one of the first and second light emitting components (2, 6).

3. The vehicle lamp as claimed in Claim 2, further **characterized in that** the first light emitting component (2) is disposed closer to the light-exit opening (12) compared to the second light emitting component (6), the first light emitting component (2) being disposed above the second light emitting component (6).

4. The vehicle lamp as claimed in Claim 3, further **characterized in that** the receiving space (11) has a shallow recess part (13) serving as the first space portion and a deep recess part (14) serving as the second space portion, each of the shallow recess part (13) and the deep recess part (14) having a recess bottom (130, 140), the recess bottom (130) of the shallow recess part (13) being disposed closer to the light-exit opening (12) compared to the recess bottom (140) of the deep recess part (14), the first light emitting component (2) being disposed in the shallow recess part (13), the second light emitting component (6) being disposed in the deep recess part (14).

5. The vehicle lamp as claimed in any one of Claims 1 to 4, **characterized in that** each of the first light emitting component (2) and the first lens body (32) has an edge proximate to the light-blocking plate (4), the vehicle lamp further **characterized by** a reflector plate (5) that is disposed in the receiving space (11) proximate to the edge of the first light emitting component (2) and the edge of the first lens body (32) and that extends in a direction from the first light emitting component (2) toward the first lens body (32).

6. The vehicle lamp as claimed in Claim 5, further **characterized in that** the light-blocking plate (4) and the reflector plate (5) are disposed at a vicinity of a junction of the shallow recess part (13) and the deep recess part (14), the reflector plate (5) being disposed above the light-blocking plate (4).

7. The vehicle lamp as claimed in any one of Claims 1 to 6, further **characterized by** a light guide piece (7) disposed in the receiving space (11) and covering the second light emitting component (6).

8. The vehicle lamp as claimed in any one of Claims 1 to 7, **characterized in that** the first lens body (32) is a concave-convex lens, and the second lens body (33) is a plano-convex lens.

9. The vehicle lamp as claimed in any one of Claims 1 to 8, **characterized in that** the lens member (3) further includes a mounting frame (31) for mounting on the lamp housing (1) at the light-exit opening (12), the first lens body (32) and the second lens body (33) being disposed on the mounting frame (31).

10. The vehicle lamp as claimed in Claim 9, further **characterized in that** the lens member (3) further includes a lens frame (34) for securing the second lens body (33) on the mounting frame (31).

11. The vehicle lamp as claimed in Claim 9 or Claim 10, further **characterized in that** the mounting frame (31) of the lens member (3) has an external surface formed with a first reflective concave surface portion (311) that surrounds the first lens body (32), and a second reflective concave surface portion (312) that surrounds the second lens body (33).
